# FASCICULE DE BREVET EUROPEEN

(11) **EP 3 063 693 B1**
(45) Date de publication et mention de la délivrance du brevet: **28.07.2021**
(21) Numéro de dépôt: 14805992.6
(22) Date de dépôt: 27.10.2014
(51) Int. Cl.: G06F 21/55, G06F 21/74, G06F 21/52

(54) **SYSTÈME DE DÉTECTION D'INTRUSION DANS UN DISPOSITIF COMPRENANT UN PREMIER SYSTÈME D'EXPLOITATION ET UN DEUXIÈME SYSTÈME D'EXPLOITATION**
EINDRINGUNGSERKENNUNGSSYSTEM BEI EINER VORRICHTUNG MIT EINEM ERSTEN UND EINEM ZWEITEN BETRIEBSSYSTEM
INTRUSION DETECTION SYSTEM IN A DEVICE COMPRISING A FIRST OPERATING SYSTEM AND A SECOND OPERATING SYSTEM

(30) Priorité: 28.10.2013 FR 1360499
(43) Date de publication de la demande: 07.09.2016
(73) Titulaire: IDEMIA France, 92400 Courbevoie (FR)
(72) Inventeur: DABOSVILLE, Guillaume, F-92700 Colombes (FR); SARTORI, Michèle, F-92700 Colombes (FR)
(74) Mandataire: Santarelli
(86) Numéro de dépôt international: PCT/FR2014/052730
(87) Numéro de publication internationale: WO 2015/063405

(56) Documents cités:
- EP-A2- 1 918 841
- US-A1- 2003 236 992
- US-A1- 2009 044 265
- US-A1- 2011 055 925
- JOHANNES WINTER: "Trusted computing building blocks for embedded linux-based ARM trustzone platforms", PROCEEDINGS OF THE 3RD ACM WORKSHOP ON SCALABLE TRUSTED COMPUTING, STC '08, 31 octobre 2008 (2008-10-31), pages 21-30, XP055117999, New York, New York, USA DOI: 10.1145/1456455.1456460 ISBN: 978-1-60-558295-5
- JING LUO ET AL: "Design and implementation of security OS based on TrustZone", 2013 IEEE 11TH INTERNATIONAL CONFERENCE ON ELECTRONIC MEASUREMENT & INSTRUMENTS, IEEE, vol. 2, 16 août 2013 (2013-08-16), pages 1027-1032, XP032569158, DOI: 10.1109/ICEMI.2013.6743208 ISBN: 978-1-4799-0757-1 [extrait le 2014-02-18]
- None

## Description

### DOMAINE DE L'INVENTION

L'invention concerne le domaine des systèmes de détection d'intrusion dédiés à un système d'exploitation, et plus particulièrement un système de détection d'intrusion dans un dispositif mettant en œuvre au moins deux systèmes d'exploitation.

### CONTEXTE DE L'INVENTION

Un système de détection d'intrusion offre des moyens pour détecter l'activité suspecte d'un système d'exploitation mis en œuvre sur un dispositif. Plusieurs types d'activités ou intrusions peuvent être détectés, telles que les intrusions portant atteinte à la confidentialité de données comme le vol de données ou la recherche de données dont l'existence n'est pas nécessairement connue par l'attaquant, des intrusions portant atteinte à l'intégrité de données comme la modification illégitime de données ou l'introduction de programmes malveillants, ou des intrusions portant atteinte à la disponibilité de données ou de services comme la destruction illégitime de données, ou la modification illégitime des droits d'accès des utilisateurs du dispositif aux données ou services.

Ces moyens pour détecter l'activité suspecte sont notamment utiles afin d'identifier les attaquants ainsi que les modifications réalisées, mais aussi afin de déterminer les corrections nécessaires des modules logiciels assurant la sécurité du système d'exploitation, et ainsi limiter une intrusion future.

La détection de l'activité suspecte d'un système résulte généralement de l'analyse du comportement de ce système, et plus particulièrement de l'analyse des évènements générés par les applications et processus de ce système. La quantité des données à analyser pouvant s'avérer importante, des méthodes d'analyse automatique sont mises en œuvre. Plusieurs approches pour détecter l'activité suspecte d'un système d'exploitation existent.

Une première approche dite comportementale est fondée sur le principe selon lequel l'exploitation d'une vulnérabilité d'un système entraîne un comportement anormal du système. Cette approche est initialement décrite dans l'article de J-P Anderson, « Computer Security Threat Monitoring and Surveillance », ACM, 1980. Un tel comportement correspond par exemple à un nombre important de tentatives de connexions infructueuses ou à une utilisation anormale de certaines ressources du système. Pour caractériser les comportements normaux et anormaux du système, des méthodes statistiques peuvent être mises en œuvre. Parmi ces méthodes, le modèle de Denning caractérise le comportement d'un système notamment en fonction de l'utilisateur du système, des ressources du système, des actions de l'utilisateur sur les ressources du système, du comportement habituel de l'utilisateur du système ou des traces enregistrant les activités anormales du système. Le comportement d'un système peut aussi être par exemple caractérisé par un ensemble de règles logiques mises en œuvre par un système expert, ou par des méthodes de classification d'événements système détectés.

Une seconde approche, dite approche par scénario, s'attache à définir le comportement d'un attaquant à l'aide d'un ensemble de règles. Cette approche est par exemple décrite dans l'article de Paul Helman, Gunar Liepins, et Wynette Richards, « Foundations of Intrusion Détection », The IEEE Computer Security Foundations Workshop , 1992. Selon cette approche, seuls les scenarii formalisés peuvent être détectés. On remarque qu'elle est par exemple mise en œuvre soit par un système expert comprenant notamment un ensemble de règles logiques définissant la politique de sécurité du système, ainsi qu'un ensemble de règles logiques définissant les vulnérabilités du système, soit par des algorithmes génétiques.

Toutefois, ces systèmes de détection d'intrusion peuvent être inhibés par un attaquant ou un programme malveillant disposant de droits d'accès suffisants. Cela risque d'entraîner la désactivation partielle ou totale du système de détection d'intrusion.

Dans ce cas, les solutions connues n'offrent pas de sécurité suffisante puisqu'elles ne permettent pas de détecter qu'un système de détection d'intrusion est désactivé, en vue par exemple de le réactiver. L'attaquant ou le programme malveillant est alors en mesure de mettre en œuvre des attaques exploitant les vulnérabilités précédemment évoquées, sans que le système ne soit en mesure de les détecter.

D'autres exemples et modes de réalisation de l'art antérieur peuvent être trouvés dans EP 1 918 841, US 2009/044265 et dans « Design and implementation of security OS based on TrustZone », JING LUO ET AL., 2013 IEEE 11th international conférence on electronic mesurement & instruments (XP032569158).

### RESUME DE L'INVENTION

La présente invention a ainsi pour objet de pallier au moins un de ces inconvénients.

Dans ce contexte, un premier aspect de l'invention concerne un dispositf selon la revendication indépendante 1.

Sur un dispositif comprenant plusieurs systèmes d'exploitation, plusieurs modes de réalisation sont envisagés : soit les deux systèmes d'exploitation fonctionnement en parallèle, par exemple grâce à l'utilisation d'un processeur multi-cœur, autrement dit un processeur possédant au moins deux cœurs physiques qui travaillent en parallèle ; soit les deux systèmes d'exploitation fonctionnent en même temps, mais lorsque l'un d'entre eux s'exécute, l'autre est endormi. Dans ce cas, on dit qu'ils ont des exécutions exclusives l'une de l'autre.

Un mécanisme de basculement est prévu pour permettre de basculer d'un système d'exploitation vers l'autre en cas d'exécutions exclusives ou pour notifier le deuxième système d'exploitation du besoin d'analyser les données collectées si les deux systèmes d'exploitation sont d'exécution parallèle.

Le mécanisme de basculement d'un premier système d'exploitation vers le deuxième système d'exploitation, dont une possible implémentation est décrite par la suite, est mis en œuvre par un module de bascule, indépendant ou pas des systèmes d'exploitation.

Corrélativement, un second aspect de l'invention concerne un procédé de détection d'une activité suspecte selon la revendication indépendante 10.

Ainsi, l'invention permet d'éviter que le système de détection d'intrusion, et plus précisément l'analyse des données d'activité collectées et l'éventuelle détection d'une intrusion ne soit désactivée par un attaquant ou un programme malveillant, afin que son activité devienne transparente, par exemple pour l'utilisateur du dispositif.

L'évitement de la désactivation du système de détection d'intrusion est obtenu, selon l'invention, en répartissant le processus de surveillance et de détection des intrusions sur au moins deux systèmes d'exploitation. En particulier, l'invention segmente le système de détection d'intrusion en plusieurs modules, dont partie sont associés au premier système d'exploitation surveillé afin de collecter les données caractérisant sa propre activité, et dont un ou plusieurs autres sont associés au deuxième système d'exploitation afin d'analyser ces données collectées, le deuxième système d'exploitation n'hébergeant, par définition, pas de programmes malveillants. Le deuxième système d'exploitation permet ainsi de détecter une éventuelle intrusion lors de l'exécution du premier système d'exploitation surveillé sans qu'une désactivation malveillante de ces modules d'analyse et de détection ne puisse être possible.

D'autres caractéristiques du système, du dispositif et du procédé de détection d'une activité suspecte selon des modes de réalisation de l'invention sont décrites dans les revendications dépendantes.

Selon une caractéristique particulière, le module de collecte enregistre les données dans une mémoire tampon du premier système d'exploitation, la mémoire tampon étant accessible en lecture par le deuxième système d'exploitation.

Corrélativement, l'étape de collecte comprend l'enregistrement desdites données dans une mémoire tampon du premier système d'exploitation, la mémoire tampon étant accessible en lecture par le deuxième système d'exploitation.

La mémoire tampon est de type file d'attente. Les données caractérisant l'activité du premier système d'exploitation sont analysées par un module d'analyse du système d'exploitation de confiance. Un mécanisme de basculement, dont une possible implémentation est décrite par la suite, est mis en œuvre afin que l'analyse puisse avoir lieu. Cependant, un basculement trop fréquent d'un système d'exploitation vers un autre aurait pour conséquence de réduire les performances des systèmes d'exploitation. Lorsque les systèmes d'exploitation ont des exécutions exclusives l'une de l'autre, l'utilisation d'une mémoire tampon pour stocker des données d'activité sur une période plus ou moins longue permet donc de réduire la fréquence de basculement du premier système d'exploitation vers le deuxième système d'exploitation afin qu'il puisse analyser l'activité du premier système d'exploitation. Lorsque les systèmes d'exploitation ont des exécutions parallèles, l'utilisation d'une mémoire tampon pour stocker des données d'activité sur une période plus ou moins longue permet de réduire la fréquence d'exécution du processus du deuxième système d'exploitation dédié à l'analyse de l'activité du premier système d'exploitation.

Selon un mode particulier de réalisation de l'invention, le module de bascule est configuré pour déclencher une bascule du premier système d'exploitation vers le deuxième système d'exploitation lorsque la taille mémoire utilisée par ladite mémoire tampon atteint une valeur prédéfinie, ou après une durée prédéterminée, ou après une action de déclenchement par l'utilisateur dudit dispositif.

Corrélativement, l'étape de bascule est déclenchée lorsque la taille mémoire utilisée par ladite mémoire tampon atteint une valeur prédéfinie, ou après une durée prédéterminée, ou après une action de déclenchement par l'utilisateur dudit dispositif.

Cette disposition définit plusieurs conditions de bascule possibles.

Il est à noter que l'étape de bascule est par exemple déclenchée après que le module de bascule a lui-même généré une instruction de basculement. En effet, le module de bascule, qui peut être indépendant des systèmes d'exploitation, dispose d'une minuterie. Cette minuterie décompte le temps écoulé depuis le dernier basculement du premier système d'exploitation vers le deuxième système d'exploitation. Après une durée prédéterminée, le module de bascule peut déclencher le basculement vers le second système d'exploitation. Le déclenchement régulier du module de bascule selon ce mode de réalisation offre comme avantage d'éviter une attaque par déni de service mis en œuvre par un attaquant ou un programme malveillant.

Selon un mode particulier de réalisation de l'invention, le module d'analyse est configuré pour vérifier le respect de droits d'accès relatifs à une donnée d'activité du premier système d'exploitation, en fonction d'un ensemble de règles stockées dans une mémoire non volatile du dispositif, accessible par le deuxième système d'exploitation.

Corrélativement, l'étape d'analyse comprend, pour une donnée relative à l'activité du premier système d'exploitation, la vérification du respect de droits d'accès en fonction d'un ensemble de règles stockées dans une mémoire non volatile du dispositif, accessible par le système d'exploitation de confiance.

Selon une caractéristique particulière, la mémoire tampon est sécurisée par une méthode de chiffrement.

Un programme malveillant ou un attaquant pourrait tenter de modifier le contenu de la mémoire tampon, par exemple en y insérant de nouvelles données ne correspondant pas nécessairement à l'activité réelle du premier système d'exploitation, ou en supprimant des données préalablement enregistrées dans la mémoire tampon. Lors de l'analyse des données par le module d'analyse du deuxième système d'exploitation, cette caractéristique particulière offre notamment comme avantage de pouvoir détecter une possible violation de l'intégrité de la mémoire tampon.

Selon une caractéristique particulière, le premier système d'exploitation et le deuxième système d'exploitation s'exécutent exclusivement l'un de l'autre.

Autrement dit, les systèmes d'exploitation peuvent fonctionner en même temps, mais lorsque l'un d'entre eux est en mode actif, l'autre est en mode inactif. Un mécanisme de bascule, dont une possible implémentation est décrite par la suite, permet de basculer d'un système d'exploitation vers un autre.

Dans un mode de réalisation, le deuxième système d'exploitation répond à la norme « TEE Protection Profile » version 1.0 » définie par l'organisation GlobalPlatform.

Selon un autre mode de réalisation, le deuxième système d'exploitation dispose de moyens de chiffrement de la mémoire tampon accessible par le deuxième système d'exploitation.

Selon un encore autre mode de réalisation, le deuxième système d'exploitation dispose de moyens de contrôle de ses interfaces de programmation, de sorte à se protéger contre des attaques logicielles en provenance du premier système d'exploitation.

Selon un encore autre mode de réalisation, lorsqu'il s'exécute, le deuxième système d'exploitation dispose d'un droit d'accès à l'ensemble des ressources dudit dispositif.

Dans un mode particulier de réalisation, les différentes étapes du procédé de détection d'une activité suspecte sont déterminées par des instructions de programmes d'ordinateurs.

L'invention vise ainsi aussi un programme d'ordinateur sur un support d'informations, comprenant des instructions pour la mise en œuvre d'un procédé de détection d'une activité suspecte tel que précité, lorsqu'il est chargé et exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou encore un moyen d'enregistrement magnétique, par exemple une disquette *(floppy disk* en terminologie anglo-saxonne), un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en œuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **Figure 1** illustre un exemple d'architecture logicielle pour un dispositif comprenant un module de détection d'intrusion selon un mode particulier de réalisation de l'invention ;
- la **Figure 2** illustre des étapes générales d'un procédé de détection d'une activité suspecte selon l'invention.
- la **Figure 3** illustre un exemple de l'état de la pile d'exécution d'un dispositif comprenant deux systèmes d'exploitation après un basculement de l'un vers l'autre.

### DESCRIPTION DETAILLEE DE L'INVENTION

De manière générale, l'invention concerne la détection de l'activité suspecte d'un premier système d'exploitation par un deuxième système d'exploitation, les deux systèmes d'exploitation étant mis en œuvre sur un même dispositif.

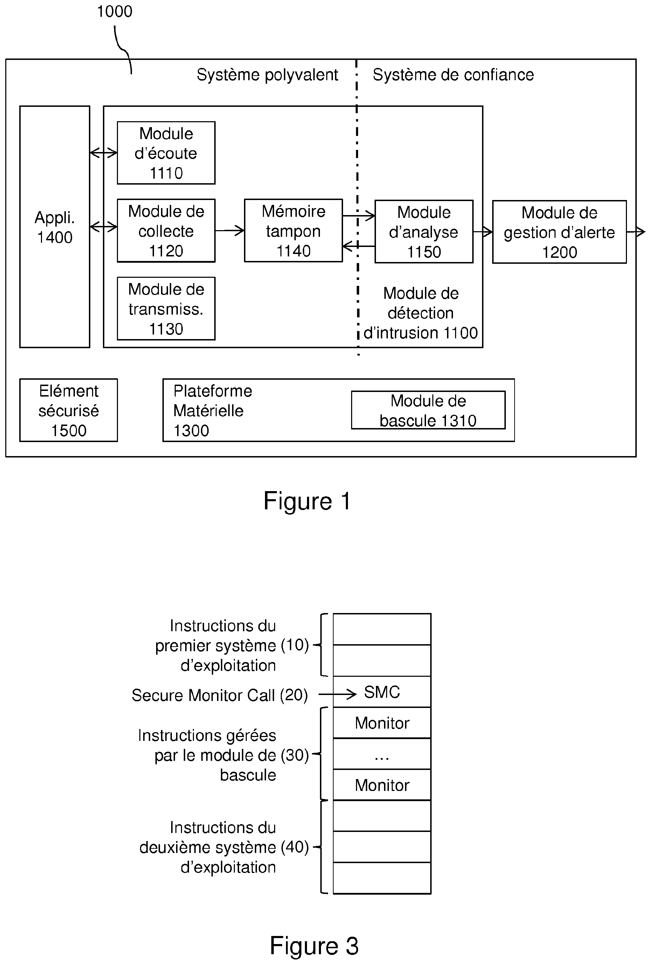

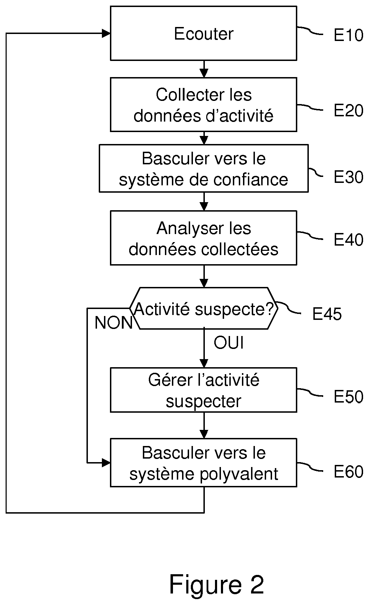

La **Figure 1** représente un dispositif 1000 selon l'invention, comprenant un module de détection d'intrusion 1100 selon l'invention, adapté à mettre en œuvre les principales étapes d'un procédé de détection d'une activité suspecte selon l'invention tel que décrit ultérieurement en référence à la **Figure 2****.**

Le dispositif 1000 peut être par exemple un terminal de téléphonie mobile, une tablette, un micro-ordinateur, ou un système intelligent autonome capable de communiquer avec d'autres systèmes distants, et ce, sans intervention humaine.

Le dispositif 1000 comprend au moins deux systèmes d'exploitation. Le premier système d'exploitation ou « système d'exploitation polyvalent » est conçu afin d'offrir un grand nombre de fonctionnalités à un utilisateur du dispositif. La taille mémoire et les performances du premier système d'exploitation sont généralement plus importantes que celles du deuxième système d'exploitation. *Android, Windows, BlackBerry OS* ou *Mac OS* (noms commerciaux) sont des exemples de systèmes d'exploitation polyvalents.

Le deuxième système d'exploitation est parfois dénommé « système d'exploitation de confiance ». On entend par système d'exploitation de confiance, un système d'exploitation protégé contre des attaques logicielles, et sur lequel seules des applications provenant de fournisseurs accrédités sont installées et exécutées. Un système d'exploitation de confiance est en mesure de contrôler de manière sécurisée ses interfaces de programmation (« Application Programming Interface » en anglais), de sorte à se protéger contre les attaques logicielles en provenance du premier système d'exploitation. Il répond par exemple à la norme « TEE Protection Profile » version 1.0 définie par l'organisation *GlobalPlatform,* et dispose de moyens de chiffrement de la mémoire qui lui est dédiée. Le système d'exploitation de confiance dispose d'un droit d'accès à l'ensemble des ressources du dispositif sur lequel il s'exécute.

Chaque système d'exploitation est associé à un environnement d'exécution, qualifié de polyvalent dans le cas du système d'exploitation polyvalent et qualifié de confiance dans le cas du système d'exploitation de confiance. Lors du démarrage du dispositif, un programme de lancement, habituellement mémorisé dans une mémoire non volatile de type ROM procède au lancement du système d'exploitation de confiance, puis, si celui-ci est exécuté avec succès, au lancement du système d'exploitation polyvalent. Le mécanisme de démarrage correspond généralement à une séquence d'étapes, et la bonne exécution d'une étape est une condition pour l'exécution de la suivante. Lors d'une étape relative au lancement du système d'exploitation polyvalent, l'intégrité du code exécuté par le dispositif est vérifiée par le système d'exploitation de confiance déjà lancé, par exemple à l'aide d'un procédé de vérification d'empreinte générée par une fonction de hachage. L'ensemble des étapes permet de démarrer le dispositif.

Les deux environnements d'exécution peuvent être hébergés sur un même composant électronique, dénommé « chipset » en anglais, et partager des ressources matérielles ou disposer de ressources matérielles dédiées. Le composant électronique intègre par exemple la technologie *TrustZone* développée par ARM, et notamment décrite dans le document « ARMv7-M Architecture Reference Manual ». Par ressource, on entend notamment les mémoires volatiles et non-volatiles, ainsi que le processeur ou encore un bus de données.

Un processeur peut par exemple disposer d'une zone de confiance contrôlée et dédiée au système d'exploitation de confiance, et d'une zone polyvalente dédiée au système d'exploitation polyvalent. Les mémoires volatiles et non-volatiles peuvent être des mémoires dédiées à chaque système d'exploitation, mais certaines zones de la mémoire non-volatile peuvent être partagées en lecture/écriture par les deux systèmes d'exploitation, où à tout le moins être accessibles au moins en lecture par l'autre système d'exploitation.

Le système d'exploitation polyvalent et le système d'exploitation de confiance coexistent sur le même dispositif 1000 mais peuvent s'exécuter de façon exclusive.

Le dispositif 1000 comprend ainsi un module de bascule 1310 notamment chargé d'effectuer le basculement de l'un des systèmes d'exploitation vers l'autre, et réciproquement, comme décrit ci-après.

Le dispositif 1000 peut aussi comprendre un élément sécurisé. Un élément sécurisé se présente par exemple sous la forme d'une carte à microcircuit amovible, ou sous la forme d'un microcircuit embarqué et soudé au dispositif, mais distinct du processeur principal du dispositif. Un élément sécurisé répond généralement au standard ISO/IEC 7816, aux normes Critères Communs et/ou à la norme « GlobalPlatform Card Spécification v 2.2.1 ». Il offre une sécurité matérielle et logicielle forte, qui est par exemple définie dans ces mêmes normes.

Le dispositif 1000 dispose d'un module de détection d'intrusion 1100 composé d'une part d'un module d'écoute 1110, d'un module de collecte 1120, d'un module de transmission 1130, et d'un moyen d'accès aux données stockées dans la mémoire tampon (non représenté, par exemple un pointeur vers l'adresse mémoire de la mémoire tampon) qui sont administrés et donc exécutés par le système d'exploitation polyvalent, et d'autre part d'un module d'analyse 1150 qui est administré et donc exécuté par le système d'exploitation de confiance.

Différentes activités relatives à un système d'exploitation, dans cet exemple le système d'exploitation polyvalent, sont auditées puis collectées. Il s'agit par exemple de toute ou partie d'informations caractérisant les accès au système d'exploitation, en particulier l'identité du l'utilisateur du dispositif ou des processus, l'horodatage de l'accès, le mode d'accès (local ou distant) ou la localisation de l'utilisateur du dispositif ou du terminal distant accédant au système d'exploitation ; d'informations sur l'usage du système, en particulier sur l'utilisation de commandes, l'accès aux entrées/sorties, le taux d'utilisation du processeur, le taux d'occupation de la mémoire, ou d'informations caractérisant l'usage des données, en particulier l'horodatage de l'accès, le type d'accès tel que la modification ou la suppression et l'identité du l'utilisateur du dispositif ou des processus ; d'informations dynamiques qui concernent les évènements du système d'exploitation tels que les lancements et arrêts de processus et les données accédées ou générées, ou qui caractérisent l'évolution de la circulation de données entre différents supports de stockage et d'organisation, par exemple les fichiers ou registres de mémoire gérés par le système. Enfin, il peut aussi s'agir d'informations caractérisant une possible violation d'une politique de sécurité, en particulier la tentative d'exécution d'une application nécessitant des droits d'accès privilégiés, la tentative d'accès à une donnée nécessitant des droits d'accès privilégiés, la tentative d'accès de lancement de commandes nécessitant des droits d'accès privilégiés, ou la modification de droits d'accès à des données.

La collecte des données caractérisant l'activité du système d'exploitation polyvalent peut être mise en œuvre par le système d'exploitation polyvalent lui-même. On parle alors d'historique d'événements qui désigne l'enregistrement séquentiel de l'activité du système d'exploitation. De manière alternative, le code source d'applications 1400 exécutées par le système d'exploitation polyvalent ou faisant partie de ce dernier peut être modifié afin que des instructions ou évènements soient générés lors de leur exécution. Les données collectées sont enregistrées dans une mémoire tampon 1140. Cette mémoire est idéalement une mémoire non volatile, gérée (i.e. avec droits en lecture/écriture) par le système d'exploitation polyvalent et accessible en lecture par le système d'exploitation de confiance. Alternativement, une mémoire non volatile, partagée en lecture/écriture entre le système d'exploitation polyvalent et le système d'exploitation de confiance est implémentée.

Dans des modes de réalisation, lors de l'enregistrement des données dans la mémoire tampon 1140, une méthode de chiffrement, autrement dit de cryptage, est mise en œuvre. Par chiffrement, on entend une méthode permettant de vérifier que l'intégrité, voire la confidentialité et l'authenticité de la mémoire tampon 1140 sont préservées.

Selon un premier mode de réalisation particulier, la mémoire tampon 1140 est chiffrée selon un procédé de chiffrement symétrique. Il s'agit par exemple d'un chiffrement par bloc mettant en œuvre les algorithmes *Avanced Encryption Standard* ou *Data Encryption Standard.* Les données de la mémoire tampon 1140 sont découpées en blocs généralement de taille fixe qui sont chiffrés les uns après les autres. Il peut aussi s'agir d'un chiffrement par flot, qui offre comme avantage de traiter des données de taille importante, et ce quelle que soit leur longueur. Un registre à décalage à rétroaction linéaire, qui fournit une suite récurrente linéaire, peut être utilisé pour mettre en œuvre ce chiffrement par flot. Préférentiellement, la clef de chiffrement est une clef éphémère, générée par l'élément sécurisé 1500 ou le système d'exploitation de confiance, qui peut être par exemple enregistrée dans une mémoire du système d'exploitation de confiance ou dans la mémoire non volatile de l'élément sécurisé 1500. Alternativement, cette clef peut être générée par le système d'exploitation polyvalent.

Lorsque cette clef symétrique est générée par un premier système d'exploitation, elle doit être partagée avec le deuxième système d'exploitation afin de permettre l'accès aux données collectées et enregistrées dans la mémoire partagée. Le premier système d'exploitation transmet donc la clef au module de bascule 1310 afin qu'il l'enregistre dans une mémoire, en vue de la transmettre au deuxième système d'exploitation. De cette manière, le deuxième système d'exploitation pourra ultérieurement utiliser cette clef de chiffrement pour accéder en clair aux données stockées dans la mémoire partagée. Alternativement, la clef de chiffrement est enregistrée dans une mémoire partagée localisée par une adresse prédéterminée et connue du deuxième système d'exploitation.

Selon un second mode particulier de réalisation, la mémoire tampon 1140 est chiffrée selon un procédé de chiffrement asymétrique. Le système d'exploitation de confiance dispose d'une clef privée et d'une clef publique, cette dernière étant connue du système d'exploitation polyvalent. Les données de la mémoire tampon 1140 sont chiffrées par le système d'exploitation polyvalent à l'aide de cette clef publique qui est par exemple enregistrée dans la mémoire non volatile du système d'exploitation polyvalent.

Selon un troisième mode particulier de réalisation, la mémoire tampon 1140 est signée afin de garantir son intégrité. Le système d'exploitation polyvalent dispose d'une clef privée et les données enregistrées dans la mémoire tampon 1140 sont signées à l'aide de cette clef privée. La clef privée est idéalement stockée dans la mémoire non volatile de l'élément sécurisé 1500. Le système d'exploitation de confiance dispose, quant à lui, de la clef publique correspondante afin de pouvoir vérifier la signature.

L'un des deux premiers modes particuliers de réalisation précédemment décrits (clef asymétrique ou symétrique) peut être combiné avec le troisième mode de réalisation afin que la confidentialité, l'authenticité et l'intégrité puissent être assurées ensemble.

Lorsque les deux environnements d'exécution s'exécutent de manière exclusive, le basculement du système d'exploitation polyvalent vers le système d'exploitation de confiance permet de déclencher l'analyse des données collectées et stockées dans la mémoire tampon 1140. La gestion du basculement est effectuée par le module de bascule 1310, qui, dans l'architecture illustrée en **Figure 1****,** est indépendant des systèmes d'exploitation. C'est par exemple le cas lorsque le module de bascule 1310 est exécuté dans la « TrustZone » au sens du document « ARMv7-M Architecture Reference Manual ».

Alternativement, le module de bascule 1310 est soit partagé en les deux environnements d'exécution, soit uniquement géré par l'un d'entre eux, classiquement le système d'exploitation polyvalent.

Selon un premier mode de réalisation, le basculement vers le système d'exploitation de confiance est initié par l'utilisateur, par exemple au travers d'une application 1400 accessible depuis l'interface graphique du système d'exploitation polyvalent. L'interaction avec l'utilisateur du dispositif 1000 initie l'envoi d'une instruction au module de bascule 1310 qui déclenche le mécanisme de basculement du système d'exploitation polyvalent vers le système d'exploitation de confiance.

Selon un second mode de réalisation, le module de transmission 1130 est capable de déterminer le taux d'occupation de la mémoire tampon 1140. Alternativement, une instruction est reçue par le module de transmission 1130, en provenance d'un processus administrant la mémoire tampon lorsque le taux d'occupation est atteint. Lorsqu'une valeur seuil prédéfinie est atteinte, le module de transmission 1130 transmet une instruction au module de bascule 1310 qui déclenche le mécanisme de basculement vers le système d'exploitation de confiance précédemment décrit.

Selon un troisième mode de réalisation, le mécanisme de basculement est déclenché après une durée prédéterminée. Préférentiellement, le module de bascule 1310 est indépendant des systèmes d'exploitations du dispositif 1000. Il peut être mis en œuvre au niveau d'une plateforme matérielle 1300. Le module de bascule 1310 est capable de gérer une minuterie qui décompte le temps écoulé depuis le dernier basculement du système d'exploitation de confiance vers le système d'exploitation polyvalent. Lorsque le temps est écoulé, le module de bascule 1310 déclenche le mécanisme de basculement vers le système d'exploitation de confiance précédemment décrit. Ce dernier mode de réalisation est particulièrement avantageux car il permet d'éviter une attaque par déni de service mise en œuvre par un attaquant ou un programme malveillant.

Pour chacun des trois modes de réalisation précédemment décrits, lorsque la ou les conditions de basculement sont remplies, le module de transmission 1130 transmet l'adresse de la mémoire tampon 1140 (par exemple un pointeur vers une sous-partie d'une mémoire de plus grande capacité que la mémoire tampon) au module de bascule 1310, afin qu'il l'enregistre dans une mémoire, en vue de la transmettre au système d'exploitation de confiance. De cette manière, le module d'analyse pourra ultérieurement accéder à cette mémoire tampon 1140. Alternativement, la mémoire tampon est une mémoire partagée localisée par une adresse prédéterminée et connue du module d'analyse 1150, et la transmission de l'adresse de la mémoire tampon 1140 n'est alors plus nécessaire.

Lorsque les deux environnements d'exécution s'exécutent de manière parallèle, par exemple grâce à l'utilisation d'un processeur multi-cœur, l'étape de basculement d'un premier environnement d'exécution vers un second environnement d'exécution correspond à une étape de notification du système d'exploitation polyvalent qui déclenche l'analyse des données stockées dans la mémoire tampon 1140, par exemple par l'instruction SMC définie ci-après. Les mêmes événements déclencheurs que ceux décrits précédemment peuvent être utilisés.

À l'issue de la mise en œuvre de l'un des modes de réalisation précédemment décrits, le module d'analyse 1150 est lancé. Lorsque la mémoire tampon est une mémoire partagée localisée par une adresse connue du module d'analyse 1150, ce dernier y accède directement. Sinon, le module de bascule 1310 qui a préalablement enregistré la valeur de l'adresse de la mémoire tampon 1140 la transmet au module d'analyse 1150. Le module d'analyse 1150 accède à la mémoire tampon 1140 à l'aide de cette valeur d'adresse transmise, et, si nécessaire, vérifie la signature associée aux données et déchiffre ces données.

Optionnellement, le module d'analyse 1150 peut réaliser une analyse statistique liant l'occupation de la mémoire tampon 1140 et le temps écoulé depuis la dernière analyse. Cette analyse statistique offre un moyen pour détecter si un attaquant ou un programme malveillant a réalisé une attaque par déni de service, par exemple en bloquant le module d'écoute 1110 ou le module de collecte 1120. Les données sont ensuite analysées, par exemple selon l'une des méthodes précédemment décrites et déjà connues.

Lorsque les deux environnements d'exécution s'exécutent de manière exclusive et qu'aucune activité suspecte n'est détectée à l'issue de l'analyse, le module d'analyse transmet une instruction au module de bascule 1310 afin de déclencher le basculement inverse par le mécanisme de bascule, c'est-à-dire du système d'exploitation de confiance vers le système d'exploitation polyvalent, par exemple par l'instruction SMC définie ci-après.

A titre d'exemple, l'analyse comprend, pour une donnée relative à l'activité du premier système d'exploitation, la vérification du respect de droits d'accès en fonction de règles. À chaque donnée, par exemple de type fichier ou répertoire ou processus exécutable, est associée au moins une métadonnée, par exemple dénommée « itag », qui caractérise le contenu de cette donnée. Cette métadonnée peut être soit enregistrée dans la mémoire tampon, soit enregistrée dans une mémoire non volatile du premier système d'exploitation et directement accessible par le module d'analyse lors de l'analyse des données enregistrées dans la mémoire tampon. Cette métadonnée est mise à jour après chaque transfert d'information. Une politique de sécurité correspondant à un ensemble de règles d'accès et dénommée « ptag » peut aussi être associée à chaque donnée. Un scénario volontairement simplifié de mise en œuvre de cette analyse est décrit ci-après : Un premier fichier « Fichier 1 » est étiqueté « Vert ». Autrement dit, Itag(Fichier 1) = Vert. Un second fichier « Fichier 2 » est étiqueté « Rouge ». Autrement dit, Itag(Fichier 2) = Rouge. Selon l'une des règles associées au second fichier, « écriture(vert →rouge)=interdit ». Si le contenu du fichier « Fichier 1 » est copié dans le « Fichier 2 », alors l'application de la règle aura pour conséquence de déclencher une information de détection positive à un module de gestion d'alerte 1200.

Selon un autre exemple, une vérification peut être menée sur la valeur de certaines données manipulées afin de s'assurer qu'elles ne prennent pas des valeurs interdites.

Selon un autre exemple, une vérification peut être menée sur l'évolution des droits d'accès associés aux données manipulées.

Lorsqu'une activité suspecte est détectée, l'information de détection positive est transmise à un module de gestion d'alerte 1200 qui peut alors déclencher des contre-mesures locales telles que la désactivation d'une application, l'arrêt d'un processus du système d'exploitation de confiance, la désactivation partielle ou totale des accès aux réseaux de communication, la modification de droits d'accès à un utilisateur ou un processus ou l'exécution d'un procédé d'authentification plus fort. L'information peut aussi être transmise à un serveur distant (non représenté), par exemple un serveur administré par un opérateur de téléphonie mobile, afin qu'il puisse détecter qu'une attaque est en cours sur une flotte de dispositifs. Le serveur distant est alors en mesure de déclencher des contre-mesures globales telle que la désactivation d'une application, l'arrêt d'un processus du système d'exploitation de confiance, la désactivation partielle ou totale des accès aux réseaux de communication pour un ensemble de dispositifs ou la désactivation d'un service proposé par le serveur afin notamment d'éviter une attaque distribuée.

La **Figure 2** présente un algorigramme d'un mode de réalisation d'un procédé conforme aux enseignements de l'invention.

Lors d'une première étape E10, l'activité du système d'exploitation polyvalent en cours d'exécution est écoutée par le module 1110.

Lors d'une seconde étape E20, les activités des processus et applications du système d'exploitation polyvalent sont collectées. La collecte des données caractérisant l'activité d'un système d'exploitation peut être mise en œuvre par le système d'exploitation lui-même. De manière alternative, le code source d'applications 1400 exécutées par le système d'exploitation polyvalent ou faisant partie de ce dernier peut être modifié afin que des instructions ou évènements soient générés lors de leurs exécutions. Les données collectées sont enregistrées dans la mémoire tampon 1140.

Lors de l'étape de collecte et d'enregistrement des données dans la mémoire tampon 1140, une méthode de chiffrement, autrement dit de cryptage, est mise en œuvre comme décrit plus haut. Par chiffrement, on entend une méthode permettant de vérifier que l'intégrité, voire la confidentialité et l'authenticité de la mémoire tampon 1140 sont préservées.

Une étape E30 de bascule du système d'exploitation polyvalent vers le système d'exploitation de confiance est réalisée afin que l'analyse, par le système d'exploitation de confiance, des données collectées et stockées dans la mémoire tampon 1140 puisse être mise en œuvre. Alternativement, lorsque les deux systèmes d'exploitation s'exécutent en parallèle, l'étape E30 de bascule correspond à une étape de notification du système d'exploitation de confiance.

Le basculement est notamment déclenché lorsqu'une condition de basculement est remplie, comme décrit plus haut.

Lors d'une étape E40, l'analyse des données collectées est mise en œuvre. Si nécessaire, la signature associée aux données est vérifiée et les données sont déchiffrées. Optionnellement, une analyse statistique liant le taux d'occupation de la mémoire tampon 1140 et le temps écoulé depuis la dernière analyse est mise en œuvre. Cette analyse statistique offre un moyen permettant de détecter si un attaquant ou un programme malveillant a réalisé une attaque par déni de service, par exemple en inhibant l'étape d'écoute E10 ou l'étape de collecte E20. Les données sont ensuite analysées, par exemple selon l'une des méthodes précédemment décrites.

Lorsqu'aucune activité suspecte n'est détectée (test E45) à l'issue de l'analyse, le mécanisme de re-basculement vers le système d'exploitation polyvalent est déclenché (E60).

Sinon, lors d'une étape E50, des contre-mesures locales telles que la désactivation d'une application, l'arrêt d'un processus du système d'exploitation de confiance, la désactivation partielle ou totale des accès aux réseaux de communication, la modification de droits d'accès à un utilisateur ou un processus ou un procédé d'authentification plus fort sont mises en œuvre. L'information de détection d'une activité suspecte peut aussi être transmise à un serveur distant afin qu'il puisse détecter qu'une attaque est en cours sur une flotte de dispositifs. Le serveur distant est alors en mesure de déclencher des contre-mesures globales telle que la désactivation d'une application, l'arrêt d'un processus du système d'exploitation de confiance ou la désactivation partielle ou totale des accès aux réseaux de communication, ou la désactivation d'un service proposé par le serveur afin notamment d'éviter une attaque distribuée. Suite à l'étape E50, le re-basculement vers le système d'exploitation polyvalent est réalisé (E60).

Après le re-basculement E60, le procédé retourne à l'étape E10, le système d'exploitation polyvalent étant à nouveau actif.

La **Figure 3** illustre un exemple de l'état de la pile d'exécution d'un dispositif comprenant deux systèmes d'exploitation après le basculement de l'un vers l'autre. Une mise en œuvre possible du mécanisme de basculement est la suivante : une instruction, autrement dit un message ou un événement, est reçue ou générée par le module de bascule 1310. Cette instruction est par exemple générée après qu'un utilisateur a interagi avec le dispositif au travers d'une de ses interfaces ou de ses périphériques, ou après qu'une durée prédéterminée se soit écoulée, ou après que la taille de la mémoire tampon 1140 a atteint une valeur prédéterminée comme décrit précédemment. Le module de bascule 1310, qui est parfois nommé « monitor» ou « scheduler » insère un ensemble d'instructions dans une pile d'exécution commune aux systèmes d'exploitation du dispositif.

Dans l'exemple de la **Figure 3****,** un ensemble d'instructions 10, chacune d'entres-elles étant interprétées de manière séquentielle, est ajouté à la pile d'exécution par le premier système d'exploitation. Après avoir reçu ou généré l'instruction préalablement décrite, le module de bascule 1310 ajoute à cette pile d'exécution une première instruction, parfois dénommée « *Secure Monitor Control* » et notée SMC, chargée de déclencher le mécanisme de basculement (20).

Ensuite, le module de bascule vérifie quel est le système d'exploitation jusqu'à présent en cours d'exécution, par exemple en déterminant la valeur du bit « Non Secure bit » enregistré dans le registre « Secure Configuration Register » dont la valeur est modifiée à chaque basculement entre les deux systèmes d'exploitation. L'état du premier système d'exploitation est ensuite sauvegardé dans une mémoire non volatile, une instruction est envoyée au premier système d'exploitation afin que les processus en cours d'exécution soient endormis, certaines mémoires sont vidées, et les périphériques matériels initialement associés au premier environnement d'exécution sont associés au deuxième environnement d'exécution. Le deuxième système d'exploitation, préalablement endormi, est réveillé et son état est restauré à partir du dernier état sauvegardé pour le deuxième système d'exploitation. Enfin, la valeur du bit « Non Secure bit » est mise à jour (30) pour indiquer que le deuxième système d'exploitation est en cours d'exécution. Le deuxième système d'exploitation peut alors ajouter ses propres instructions (40) à la pile d'exécution.

Les exemples qui précèdent ne sont que des modes de réalisation de l'invention qui ne s'y limite pas.

## Revendications

1. Dispositif (1000) comprenant un premier système d'exploitation, un deuxième système d'exploitation et un système de détection d'intrusion, dans lequel le deuxième système d'exploitation dispose de moyens de contrôle de ses interfaces de programmation, de sorte à se protéger contre des attaques logicielles en provenance du premier système d'exploitation, le système de détection d'intrusion comprenant un module d'écoute (1110) configuré pour être exécuté dans le premier système d'exploitation pour écouter l'activité de ce premier système d'exploitation et un module de collecte (1120) configuré pour être exécuté dans le premier système d'exploitation pour collecter des données caractérisant l'activité du premier système d'exploitation,
ledit système de détection d'intrusion comprend un module d'analyse et de détection (1150) configuré pour être exécuté dans le deuxième système d'exploitation pour analyser les données collectées dans le premier système d'exploitation et détecter une activité suspecte dans le premier système d'exploitation en fonction de ladite analyse,
dans lequel le premier système d'exploitation et le deuxième système d'exploitation s'exécutent en mode exclusif l'un par rapport à l'autre,
**caractérisé en ce que** le module de collecte (1120) enregistre lesdites données dans une mémoire tampon (1140) dudit premier système d'exploitation, ladite mémoire tampon (1140) étant accessible en lecture par le deuxième système d'exploitation.

2. Dispositif selon la revendication 1, **caractérisé en ce que** la mémoire tampon (1140) est sécurisée par une méthode de chiffrement.

3. Dispositif selon l'une des revendications 1 ou 2, **caractérisé en ce que** le module d'analyse (1150) est configuré pour vérifier, pour une donnée relative à l'activité du premier système d'exploitation, le respect de droits d'accès à des données en fonction d'un ensemble de règles stockées dans une mémoire non volatile du dispositif, accessible par le deuxième système d'exploitation.

4. Dispositif selon l'une des revendications 1 à 3, **caractérisé en ce qu'**il comprend un module de bascule (1310) configuré pour déclencher une bascule du premier système d'exploitation vers le deuxième système d'exploitation lorsque la taille mémoire utilisée par ladite mémoire tampon (1140) atteint une valeur prédéfinie, ou après une durée prédéterminée, ou après une action de déclenchement par l'utilisateur du dispositif (1000).

5. Dispositif selon l'une des revendications 1 à 4, **caractérisé en ce que** le premier système d'exploitation et le deuxième système d'exploitation s'exécutent en mode exclusif l'un par rapport à l'autre.

6. Dispositif selon l'une des revendications 1 à 5, **caractérisé en ce que** le deuxième système d'exploitation répond à la norme « TEE Protection Profile » version 1.0 » définie par l'organisation GlobalPlatform.

7. Dispositif selon l'une des revendications 1 à 6, **caractérisé en ce que** le deuxième système d'exploitation dispose de moyens de chiffrement de la mémoire tampon accessible par le deuxième système d'exploitation.

8. Dispositif selon l'une des revendications 1 à 7, **caractérisé en ce que**, lorsqu'il s'exécute, le deuxième système d'exploitation dispose d'un droit d'accès à l'ensemble des ressources dudit dispositif.

9. Dispositif selon l'une des revendications 1 à 8, ledit dispositif étant un terminal de téléphonie mobile.

10. Procédé de détection d'une activité suspecte dans un dispositif comprenant un premier système d'exploitation et un deuxième système d'exploitation, dans lequel le deuxième système d'exploitation dispose de moyens de contrôle de ses interfaces de programmation, de sorte à se protéger contre des attaques logicielles en provenance du premier système d'exploitation, le procédé de détection comprenant :
une étape d'écoute dans le premier système d'exploitation pour écouter l'activité de ce premier système d'exploitation,
une étape de collecte dans le premier système d'exploitation pour collecter des données caractérisant l'activité du premier système d'exploitation,
une étape d'analyse et de détection dans le deuxième système d'exploitation pour analyser les données collectées dans le premier système d'exploitation et détecter une activité suspecte dans le premier système d'exploitation en fonction de ladite analyse,
dans lequel le premier système d'exploitation et le deuxième système d'exploitation s'exécutent en mode exclusif l'un par rapport à l'autre,
**caractérisé en ce que** l'étape de collecte comprend l'enregistrement desdites données dans une mémoire tampon (1140) du premier système d'exploitation, ladite mémoire tampon (1140) étant accessible en lecture par le deuxième système d'exploitation.

11. Procédé de détection d'une activité suspecte selon la revendication 10, **caractérisé en ce que** la mémoire tampon (1140) est sécurisée par une méthode de chiffrement.

12. Procédé de détection d'une activité suspecte selon l'une des revendications 10 ou 11, **caractérisé en ce que** l'étape d'analyse comprend, pour une donnée relative à l'activité du premier système d'exploitation, la vérification du respect de droits d'accès à des données en fonction d'un ensemble de règles stockées dans une mémoire non volatile du dispositif, accessible par le deuxième système d'exploitation.

13. Procédé de détection d'une activité suspecte selon l'une des revendications 10 à 12, **caractérisé en ce qu'**il comprend une étape de bascule, ladite étape de bascule étant déclenchée lorsque la taille mémoire utilisée par ladite mémoire tampon (1140) atteint une valeur prédéfinie, ou après une durée prédéterminée, ou après une action de déclenchement par l'utilisateur du dispositif (1000).

14. Produit programme d'ordinateur comprenant des instructions pour la mise en œuvre d'un procédé de détection d'intrusion selon l'une quelconque des revendications 10 à 13, lorsqu'il est chargé et exécuté par un processeur.

15. Support lisible par un processeur comprenant les instructions d'un programme d'ordinateur pour mettre en œuvre un procédé de détection d'intrusion selon l'une quelconque des revendications 10 à 13.

## Patentansprüche

1. Vorrichtung (1000) umfassend ein erstes Betriebssystem, ein zweites Betriebssystem und ein Eindringungserkennungssystem, wobei das zweite Betriebssystem über Kontrollmöglichkeiten für seine Programmierschnittstellen verfügt, um sich vor Softwareangriffen aus dem ersten Betriebssystem zu schützen, wobei das Eindringungserkennungssystem ein Abhörmodul (1110) umfasst, das dafür konfiguriert ist, in dem ersten Betriebssystem ausgeführt zu werden, um die Aktivität dieses ersten Betriebssystems abzuhören, und ein Datenerfassungsmodul (1120) umfasst, das dafür konfiguriert ist, in dem ersten Betriebssystem ausgeführt zu werden, um Daten zu erfassen, die für die Aktivität des ersten Betriebssystems charakteristisch sind,
wobei das Eindringungserkennungssystem ein Analyse- und Erkennungsmodul (1150) umfasst, das dafür konfiguriert ist, in dem zweiten Betriebssystem ausgeführt zu werden, um die in dem ersten Betriebssystem erfassten Daten zu analysieren und auf der Grundlage dieser Analyse eine verdächtige Aktivität in dem ersten Betriebssystem zu erkennen,
wobei das erste Betriebssystem und das zweite Betriebssystem im exklusiven Modus zueinander ausgeführt werden,
**dadurch gekennzeichnet, dass** das Datenerfassungsmodul (1120) die Daten in einem Pufferspeicher (1140) des ersten Betriebssystems speichert, wobei der Pufferspeicher (1140) von dem zweiten Betriebssystem ausgelesen werden kann.

2. Vorrichtung nach Anspruch 1, **dadurch gekennzeichnet, dass** der Pufferspeicher (1140) durch ein Verschlüsselungsverfahren gesichert ist.

3. Vorrichtung nach einem der Ansprüche 1 oder 2, **dadurch gekennzeichnet, dass** das Analysemodul (1150) dafür konfiguriert ist, für Daten über die Aktivität des ersten Betriebssystems die Einhaltung von Zugriffsrechten auf Daten auf der Grundlage einer Reihe von Regeln zu überprüfen, die in einem nicht-flüchtigen Speicher der Vorrichtung gespeichert sind, auf den das zweite Betriebssystem zugreifen kann.

4. Vorrichtung nach einem der Ansprüche 1 bis 3, **dadurch gekennzeichnet, dass** sie ein Kippmodul (1310) enthält, das dafür konfiguriert ist, eine Umschaltung von dem ersten Betriebssystem zu dem zweiten Betriebssystem auszulösen, wenn die von dem Pufferspeicher (1140) verwendete Speichergröße einen voreingestellten Wert erreicht, oder nach einer vorgegebenen Zeit oder nach einer vom Benutzer der Vorrichtung (1000) ausgelösten Aktion.

5. Vorrichtung nach einem der Ansprüche 1 bis 4, **dadurch gekennzeichnet, dass** das erste Betriebssystem und das zweite Betriebssystem im exklusiven Modus zueinander ausgeführt werden.

6. Vorrichtung nach einem der Ansprüche 1 bis 5, **dadurch gekennzeichnet, dass** das zweite Betriebssystem den von der Organisation GlobalPlatform definierten Standard "TEE Protection Profile", Version 1.0, erfüllt.

7. Vorrichtung nach einem der Ansprüche 1 bis 6, **dadurch gekennzeichnet, dass** das zweite Betriebssystem Mittel zur Verschlüsselung des Pufferspeichers aufweist, auf den das zweite Betriebssystem zugreifen kann.

8. Vorrichtung nach einem der Ansprüche 1 bis 7, **dadurch gekennzeichnet, dass** wenn es ausgeführt wird, das zweite Betriebssystem über ein Recht auf Zugang zu allen Ressourcen dieser Vorrichtung verfügt.

9. Vorrichtung nach einem der Ansprüche 1 bis 8, wobei die Vorrichtung ein Mobiltelefon ist.

10. Verfahren zur Erkennung einer verdächtigen Aktivität in einer Vorrichtung mit einem ersten Betriebssystem und einem zweiten Betriebssystem, wobei das zweite Betriebssystem über Mittel zur Kontrolle seiner Programmierschnittstellen verfügt, um sich vor Softwareangriffen aus dem ersten Betriebssystem zu schützen, wobei das Erkennungsverfahren umfasst:
einen Schritt des Abhörens in dem ersten Betriebssystem, um die Aktivität dieses ersten Betriebssystems abzuhören,
einen Schritt des Erfassens in dem ersten Betriebssystem, um Daten zu erfassen, die für die Aktivität des ersten Betriebssystems charakteristisch sind;
einen Schritt der Analyse und der Erkennung in dem zweiten Betriebssystem, um die in dem ersten Betriebssystem erfassten Daten zu analysieren und auf der Grundlage dieser Analyse eine verdächtige Aktivität in dem ersten Betriebssystem zu erkennen,
wobei das erste Betriebssystem und das zweite Betriebssystem im exklusiven Modus zueinander ausgeführt werden,
**dadurch gekennzeichnet, dass** der Schritt des Erfassens die Aufzeichnung der Daten in einem Pufferspeicher (1140) des ersten Betriebssystems umfasst, wobei der Pufferspeicher (1140) von dem zweiten Betriebssystem ausgelesen werden kann.

11. Verfahren zur Erkennung einer verdächtigen Aktivität nach Anspruch 10, **dadurch gekennzeichnet, dass** der Pufferspeicher (1140) durch ein Verschlüsselungsverfahren gesichert ist.

12. Verfahren zur Erkennung einer verdächtigen Aktivität nach einem der Ansprüche 10 oder 11, **dadurch gekennzeichnet, dass** der Schritt der Analyse für Daten über die Aktivität des ersten Betriebssystems die Überprüfung der Einhaltung von Zugriffsrechten auf Daten auf der Grundlage einer Reihe von Regeln umfasst, die in einem nicht-flüchtigen Speicher der Vorrichtung gespeichert sind, auf den das zweite Betriebssystem zugreifen kann.

13. Verfahren zur Erkennung einer verdächtigen Aktivität nach einem der Ansprüche 10 bis 12, **dadurch gekennzeichnet, dass** es einen Schritt des Umschaltens umfasst, wobei der Schritt des Umschaltens ausgelöst wird, wenn die von dem Pufferspeicher (1140) verwendete Speichergröße einen voreingestellten Wert erreicht, oder nach einer vorgegebenen Zeit oder nach einer von dem Benutzer der Vorrichtung (1000) ausgelösten Aktion.

14. Computerprogrammprodukt umfassend Befehle zur Durchführung eines Verfahrens zur Eindringungserkennung nach einem der Ansprüche 10 bis 13, wenn es geladen und durch einen Prozessor ausgeführt wird.

15. Von einem Prozessor lesbares Medium umfassend Befehle eines Computerprogramms zur Durchführung eines Verfahrens zur Eindringungserkennung nach einem der Ansprüche 10 bis 13.

## Claims

1. Device (100) comprising a first operating system, a second operating system and an intrusion detection system, wherein the second operating system includes means for monitoring its programming interfaces to protect itself against software attacks originating from the first operating system, the intrusion detection system comprising a listening module (1110) configured to be executed in the first operating system in order to listen to the activity of this first operating system and a collecting module (1120) configured to be executed in the first operating system in order to collect data characterizing the activity of the first operating system,
said intrusion detection system including an analysis and detection module (1150) configured to be executed in the second operating system in order to analyze the data collected in the first operating system and to detect a suspicious activity in the first operating system as a result of said analysis,
wherein the first operating system and the second operating system are executed exclusively of each other,
**characterized in that** the collecting module (1120) stores said data in a buffer memory (1140) of said first operating system, said buffer memory (1140) being accessible in read mode by the second operating system.

2. Device according to claim 1, **characterized in that** the buffer memory (1140) is secured by an encryption method.

3. Device according to one of claims 1 or 2, **characterized in that** the analysis and detection module (1150) is configured to verify, for data relating to the activity of the first operating system, compliance with data access rights based on a set of rules stored in a non-volatile memory of the device accessible by the second operating system.

4. Device according to one of claims 1 to 3, **characterized in that** it comprises a switching module (1310) configured to trigger switching from the first operating system to the second operating system when the memory capacity used by said buffer memory (1140) reaches a predefined value, or after a predetermined time, or after a triggering action by the user of the device (1000).

5. Device according to one of claims 1 to 4, **characterized in that** the first operating system and the second operating system are executed exclusively of each other.

6. Device according to one of claims 1 to 5, **characterized in that** the second operating system conforms to the "TEE Protection Profile" version 1.0" defined by the GlobalPlatform Organization.

7. Device according to one of claims 1 to 6, **characterized in that** the second operating system includes means for encrypting the buffer memory accessible by the second operating system.

8. Device according to one of claims 1 to 7, **characterized in that**, when it is executed, the second operating system has a right of access to all resources of said device.

9. Device according to one of claims 1 to 8, said device being a mobile phone terminal.

10. Method for detecting a suspicious activity in a device including a first operating system and a second operating system, wherein the second operating system includes means for monitoring its programming interfaces to protect itself against software attacks originating from the first operating system, the detection method comprising:
a step of listening in the first operating system to listen to the activity of this first operating system,
a collecting step in the first operating system to collect data characterizing the activity of the first operating system,
an analysis and detection step in the second operating system to analyze the data collected in the first operating system and detect a suspicious activity in the first operating system as a result of said analysis,
wherein the first operating system and the second operating system are executed exclusively of each other,
**characterized in that** the collecting step includes storing said data in a buffer memory (1140) of the first operating system, said buffer memory (1140) being accessible in read mode by the second operating system.

11. Method of detecting a suspicious activity according to claim 10, **characterized in that** the buffer memory (1140) is secured by an encryption method.

12. Method of detecting a suspicious activity according to one of claims 10 or 11, **characterized in that** the analysis step includes, for data relating to the activity of the first operating system, verification of compliance with data access rights based on a set of rules stored in a non-volatile memory of the device, accessible by the second operating system.

13. Method of detecting a suspicious activity according to one of claims 10 to 12, **characterized in that** it comprises a switching step, said switching step being triggered when the memory capacity used by said buffer memory (1140) reaches a predefined value, or after a predetermined time, or after a triggering action by the user of the device (1000).

14. Computer program product comprising instructions for executing an intrusion detection method according to any one of claims 10 to 13 when it is loaded and executed by a processor.

15. Processor-readable medium including instructions of a computer program for executing an intrusion detection method according to any one of claims 10 to 13.
